# EUROPÄISCHE PATENTSCHRIFT

(11) **EP 3 041 655 B1**
(45) Veröffentlichungstag und Bekanntmachung des Hinweises auf die Patenterteilung: **10.07.2019**
(21) Anmeldenummer: 14796411.8
(22) Anmeldetag: 02.09.2014
(51) Int. Cl.: B29C 45/27

(54) **KALTKANAL-SCHMELZEVERTEILER**
COLD RUNNER MELT DISTRIBUTOR
RÉPARTITEUR DE MATIÈRE FONDUE À CANAUX FROIDS

(30) Priorität: 06.09.2013 DE 102013014884
(43) Veröffentlichungstag der Anmeldung: 13.07.2016
(73) Patentinhaber: Braunform GmbH, 79353 Bahlingen (DE)
(72) Erfinder: BÜHLER, Klaus, 79353 Bahlingen (DE); DUFFNER, Michael, 77933 Lahr/Schwarzwald (DE)
(74) Vertreter: Mehl-Mikus, Claudia
(86) Internationale Anmeldenummer: PCT/EP2014/002378
(87) Internationale Veröffentlichungsnummer: WO 2015/032490

(56) Entgegenhaltungen:
- WO-A1-2013/074741
- JP-A- 2000 043 104
- US-A1- 2012 225 159

## Beschreibung

Die Erfindung betrifft einen Kaltkanal-Schmelzeverteiler für ein Gieß- oder Spritzgieß-Werkzeug zum Gießen oder Spritzgießen von Formteilen nach dem Oberbegriff des Anspruchs 1.

Die US 2012/225159 A1 sowie die WO 2013/074741 A1 beschreiben Werkzeuge umfassend mehrere Formenhohlräume und umfassend Schmelzeverteiler. Die JP 2000 043104 A beschreibt ein Werkzeug mit einer Verteilerplatte und mit einem gemeinsamen Düsenblock, wobei der gemeinsame Düsenblock beabstandet zu vorderen Enden von Düsenöffnungen angeordnet ist.

Die mit dem erfindungsgemäßen Kaltkanal-Schmelzeverteiler zu gießenden oder zu spritzgießenden Formteile sind dabei im allgemeinsten Sinne zu verstehen. Generell schließt die Erfindung alle Formmassen ein, welche mit einer Temperatur von weniger als 150°C zugeführt werden und sich anschließend in den Formenhohlräumen verfestigen.

Ein erstes Beispiel ist das Spritzgießen von Silikonteilen. Hier wird die entsprechende Formmasse im kalten Zustand zugeführt. Nach dem Erhitzen der Formmasse in den Formenhohlräumen findet dann eine chemische Vernetzung und damit eine Verfestigung statt.

Verallgemeinernd bedeutet dies für dieses Beispiel, dass bei dem Kaltkanal-Schmelzeverteiler die zuzuführende Formmasse eine vergleichsweise niedrigere Temperatur aufweist, während im Formbereich zur chemischen Vemetzung der Formmasse eine höhere Temperatur herrscht. Gleichermaßen können als Formmasse Gummi, Duromere, Duroplaste etc. vorgesehen sein.

Ein zweites Beispiel ist die Verwendung von Formmassen, welche unterhalb einer Temperatur von 150°C in viskoser Form zugeführt werden und anschließend in den Formenhohlräumen abgekühlt werden, um sich dadurch zu verfestigen. Ein Beispiel hierfür wäre Seife, welche bei 80°C flüssig ist und nach dem Abkühlen in dem Formenhohlraum fest wird. Gleichermaßen können als Formmasse auch Wachs, Nahrungsmittel, technische Metalllegierungen etc. vorgesehen sein.

Grundsätzlich ist somit der erfindungsgemäße Kaltkanal-Schmelzeverteiler zum Gießen oder Spritzgießen von Formteilen für Formmassen gedacht, welche dem Formenhohlraum kalt mit einer Temperatur von weniger als 150°C zugeführt werden und nach dem Erwärmen innerhalb des Formenhohlraums zur Verfestigung chemisch miteinander reagieren. Gleichermaßen ist der erfindungsgemäße Kaltkanal-Schmelzeverteiler jedoch auch für Formmassen einsetzbar, welche im kalten Zustand, d. h. mit einer Temperatur unterhalb von 150°C den Formenhohlräumen zugeführt werden, ohne dass diese Formmassen chemisch miteinander reagieren. Hier erfolgt die Verfestigung durch Abkühlung.

Die bekannten Werkzeuge zum Gießen oder Spritzgießen von Formteilen weisen mehrere Formenhohlräume auf, denen - wie ausgeführt - die Formmasse über einen Kaltkanal-Schmelzeverteiler zugeführt wird und in denen sich dann die Formmasse verfestigt. Jedem Formenhohlraum ist dabei eine Zuführung für die Formmasse zugeordnet. Diese Zuführung für die Formmasse weist einen Zuführkanal auf, welcher am vorderen Ende eine Zuführdüse definiert und in welchem eine Verschlussnadel angeordnet ist.

Der Nachteil bei diesem Kaltkanal-Schmelzeverteiler ist, dass jede, dem jeweiligen Formenhohlraum zugeordnete Zuführung für die Formmasse in einem eigenen Block ausgebildet ist. Sofern mehrere Formenhohlräume vorgesehen sind, werden die entsprechenden Blöcke mit ihren Formmassenzuführungen aneinandergefügt. Der Nachteil besteht hier darin, dass damit nur relativ große Nestabstände möglich sind, so dass das Werkzeug insgesamt sehr voluminös ausgebildet ist bzw. dass bei einer vorgegebenen Werkzeuggröße nur eine sehr begrenzte Anzahl von Formnestern untergebracht werden können.

Bei den vorbeschriebenen Blöcken für die Formmassenzuführung besteht das Grundprinzip darin, dass die Zuführeinrichtungen innerhalb des Blocks rückseitig mit einem Dichtring ausgestattet sind. Dieser dient zum einen der Abdichtung und zum anderen übt er einen Druck auf den Kaltkanal für einen entsprechenden Sitz im Block aus. In nachteiliger Weise hängt die Abdichtung dann immer vom Preßsitz ab, und umgekehrt.

Davon ausgehend liegt der Erfindung die Aufgabe zugrunde, einen Kaltkanal-Schmelzeverteiler für ein Gieß- oder Spritzgieß-Werkzeug zum Gießen oder Spritzgießen von Formteilen der eingangs angegebenen Art zu schaffen, bei welchem der Abstand zwischen den Formnestern geringer ist.

Die technische Lösung ist gekennzeichnet durch die Merkmale im Kennzeichen des Anspruchs 1.

Dadurch Ist ein Kaltkanal-Schmelzeverteiler für ein Gieß- oder Spritzgieß-Werkzeug zum Gießen oder Spritzgießen von Formteilen geschaffen, welcher sich durch kleine und enge Nestabstände der Formenhohräume auszeichnet. Dies hat den Vorteil, dass das Werkzeug mit seinen Formenhohlräumen sehr kompakt baut. Die Grundidee des erfindungsgemäßen Kaltkanal-Schmelzeverteilers besteht in einem Monoblock, in welchem die einzelnen Zuführungen für die Formmasse zu den Formnestern ausgebildet und untergebracht sind. Dies bedeutet, dass dieser für sämtliche Zuführungen gemeinsame Düsenblock/Monoblock entsprechend der Anzahl der Formenhohlräume entsprechende Zuführkanäle aufweist. Damit weist der Düsenblock/Monoblock zueinander parallele Bohrungen auf, welche die Kaltkanäle definieren und in welchen die eigentlichen Einrichtungen der Kaltkanäle eingesetzt sind.

Eine erste Variante schlägt gemäß Anspruch 3 vor, dass die Verschlussnadel direkt in dem zugehörigen Zuführkanal angeordnet ist. Dies bedeutet, dass sich die Verschlussnadel direkt in der entsprechenden Bohrung des Düsenblocks befindet. Dadurch ist eine extrem kompakte Bauweise geschaffen.

Eine zweite Variante schlägt gemäß Anspruch 4 vor, dass ein zusätzlicher hülsenförmiger Düsenkörper vorgesehen ist, in welchem die Verschlussnadel aufgenommen ist. Dies zusätzliche Verwendung eines Düsenkörpers hat den Vorteil, dass dadurch eine leichtere Reinigung möglich ist. Außerdem ist die Dichtwirkung verbessert

Die Weiterbildung gemäß Anspruch 5 schlägt vor, dass der Düsenblock Temperierkanäle zum Temperieren der Formmasse aufweist. Diese Temperierkanäle können auf einem ganz bestimmten Weg durch den Düsenblock verlaufen, um so die gewünschte Temperierleistung zu erzielen Temperieren kann dabei Kühlen oder Erwärmen bedeuten.

Der Düsenblock ist zwischen zwei Platten festgelegt. Darunter ist zu verstehen, dass im vorderen Düsenbereich eine Austrittsplatte für die Schmelze vorgesehen ist, während am rückwärtigen Bereich des Kaltkanals eine Verteilerplatte vorgesehen ist. Diese hintere Verteilerplatte dient als Hauptverteiler für die Schmelze der zuzuführenden Formmasse.

Die Weiterbildung gemäß Anspruch 6 schlägt vor, dass im vorderen Düsenbereich entweder zwischen dem Düsenblock und der vorderen Austrittsplatte oder zwischen dem Düsenkörper und der vorderen Austrittsplatte eine druckfeste Isolierscheibe mit geringer thermischer Leitfähigkeit angeordnet ist. Diese Scheibe kann aus einem Mineralwerkstoff bestehen.

Entsprechend weist gemäß der Weiterbildung in Anspruch 7 die Rückseite des Systems zum einen eine Spannfeder beispielsweise in Form einer Tellerfeder und zum anderen einen Dichtring auf. Der Vorteil in der separaten Verwendung einer Feder bezüglich des Dichtringes besteht darin, dass die Einpresskraft des Kaltkanals an die Kavität individuell eingestellt werden kann. Dadurch können durch unterschiedliche Federkonstanten unterschiedliche Drücke aufgebaut werden, und zwar unabhängig von der Dichtwirkung des Dichtringes. Die spezielle Anordnung des Dichtringes hat den Vorteil, dass der Kaltkanal in Axialrichtung verschoben werden kann.

Ausführungsbeispiele eines erfindungsgemäßen Kaltkanal-Schmelzeverteilers für ein Gieß- oder Spritzgieß-Werkzeug zum Gießen oder Spritzgießen von Formteilen werden nachfolgend anhand der Zeichnungen beschrieben. In diesen zeigt:
- **Fig. 1a**: eine Schnittansicht durch einen Düsenblock des Kaltkanal-Schmelzeverteilers in einer ersten Ausführungsvariante ohne zusätzlichen Düsenkörper;
- **Fig. 1b**: einen Schnitt entlang der Linie B-B in **Fig. 1a**;
- **Fig. 1c**: der Detailausschnitt A in **Fig. 1a**;
- **Fig. 1d**: der Detailausschnitt B in **Fig. 1a**;
- **Fig. 2a**: eine Ausschnittsansicht des Kaltkanalsystems in **Fig. 1a**;
- **Fig. 2b**: eine Schnittdarstellung gemäß dem Schnitt A-A in **Fig. 2a**;
- **Fig. 2c**: eine Schnittdarstellung gemäß dem Schnitt B-B in **Fig. 2a**;
- **Fig. 3a**: eine Schnittansicht durch einen Düsenblock des Kaltkanal-Schmelzeverteilers in einer zweiten Ausführungsvariante mit zusätzlichen Düsenkörper;
- **Fig. 3b**: einen Schnitt entlang der Linie B-B in **Fig. 3a**;
- **Fig. 3c**: der Detailausschnitt A in **Fig. 3a**;
- **Fig. 3d**: der Detailausschnitt B in **Fig. 3a**;
- **Fig. 4a**: eine Ausschnittsansicht des Kaltkanalsystems in **Fig. 3a**;
- **Fig. 4b**: eine Schnittdarstellung gemäß dem Schnitt A-A in **Fig. 4a**;
- **Fig. 4c**: eine Schnittdarstellung gemäß dem Schnitt B-B in **Fig. 4a**.

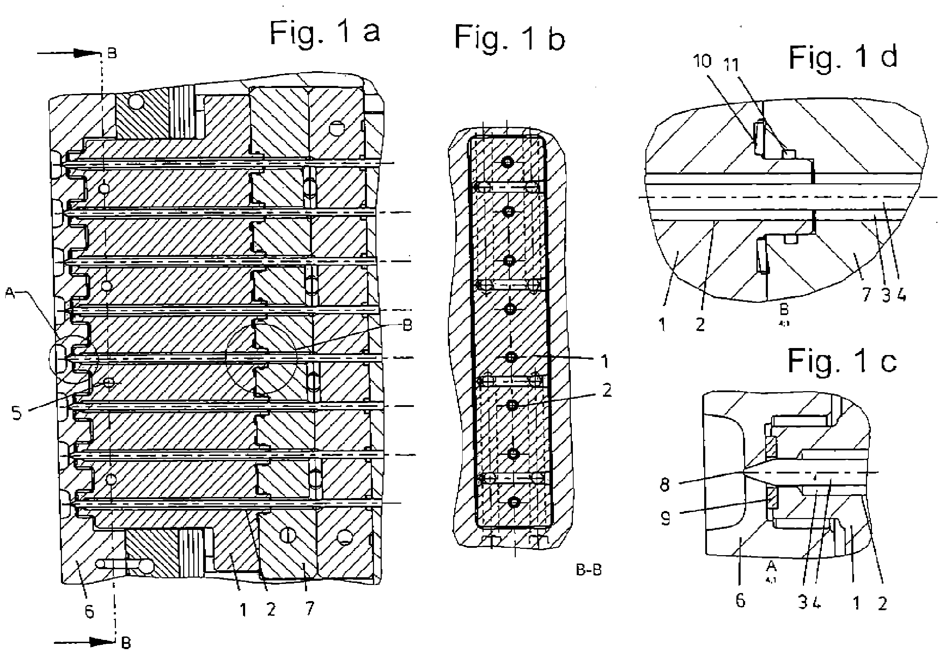

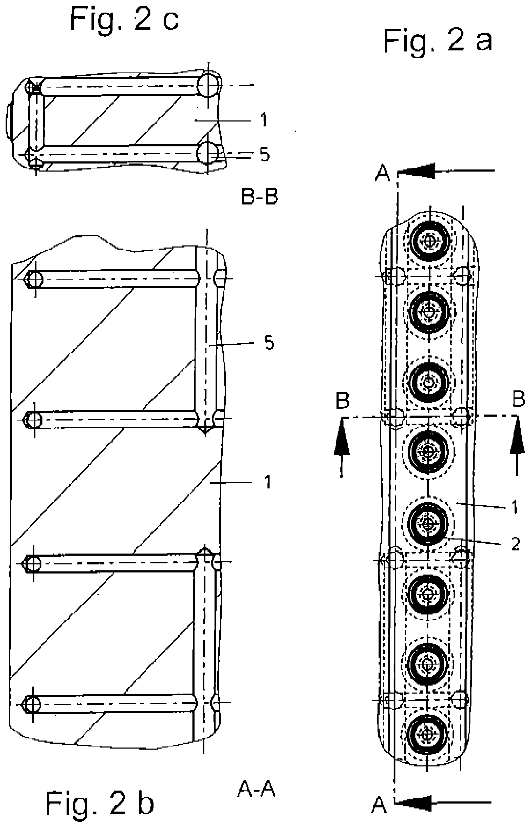

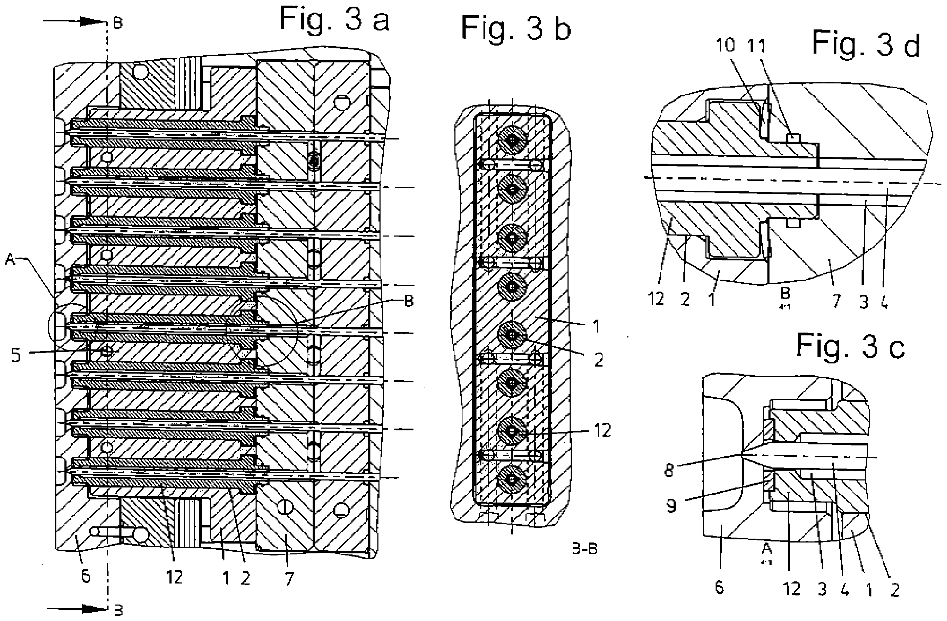

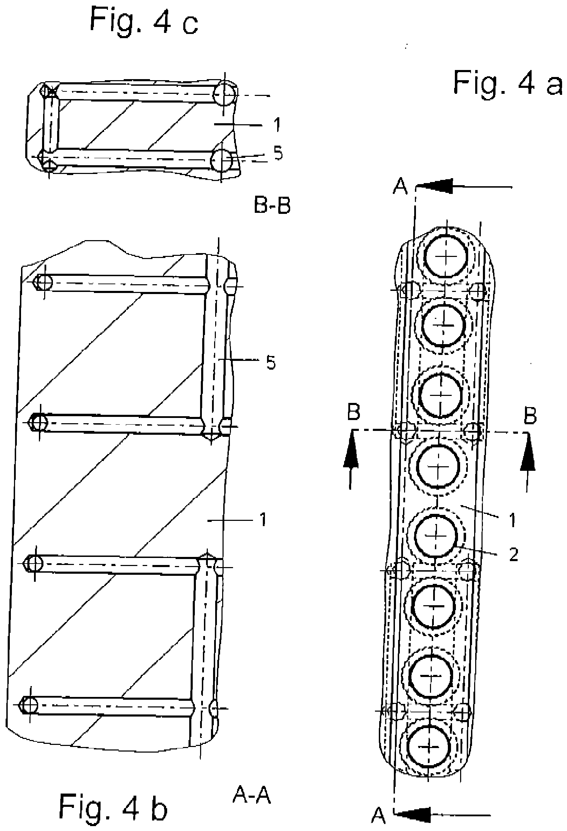

In den **Fig. 1** und **2** ist eine erste Ausführungsform und in den **Fig. 3** und **4** eine zweite Ausführungsform eines Kaltkanal-Schmelzeverteilers für ein Gieß- oder Spritzgieß-Werkzeug zum Gießen oder Spritzgießen von Formteilen dargestellt.

Beim ersten Ausführungsbeispiel in den Fig. 1 und 2 weist der Kaltkanal-Schmelzeverteiler als zentrales Element einen Düsenblock 1 auf. In diesem Düsenblock 1 sind entsprechend den - nicht dargestellten - Formennestern des Werkzeugs Zuführkanäle 2 in Form von Bohrungen ausgebildet. Diese dienen der Zuführung von "kalter" Formmasse unterhalb von 150°C zu den Formnestern.

In den Zuführkanälen 2 des Düsenblocks 1 befindet sich jeweils eine axial verschiebbare Verschlussnadel 4. Diese ist von einem zylindermantelförmigen Freiraum 3 für die Formmasse umgeben.

Außerdem verlaufen in dem Düsenblock 1 Kühlkanäle 5 zum Kühlen des Düsenblocks 1.

Der Düsenblock 1 ist sandwichartig zwischen zwei Platten 6, 7 festgelegt. Dabei definiert die vordere Austrittsplatte 6 im Bereich des vorderen Endes des Zuführkanals 2 des Düsenblocks 1 jeweils eine Düsenöffnung 8, welche mittels der axial verstellbaren Verschlussnadel 4 öffenbar und verschließbar ist. Zwischen der Stirnseite des Düsenblocks 1 im Bereich dieser Düsenöffnungen 8 und der Rückseite der vorderen Austrittsplatte 6 befindet sich jeweils eine Scheibe 9 in Form einer druckfesten Isolierscheibe mit geringer thermischer Leitfähigkeit.

Zwischen der hinteren (zweiteiligen) Verteilerplatte 7 und dem Düsenblock 1 ist Im Bereich der Zuführkanäle 2 jeweils eine Feder 10 in Form einer Tellerfeder angeordnet. Mittels dieser Feder 10 kann eine individuelle Einstellung der Einpreßkraft an die Kavität erzielt werden. Weiterhin ist in diesem Bereich ein Dichtring 11 zwischen dem Düsenblock 1 und der hinteren Verteilerplatte 7 vorgesehen. Dieser Dichtring 11 befindet sich dabei im Seitenwandbereich der vorbeschriebenen Teile. Zu diesem Zweck weist der Düsenblock 1 einen höckerartigen Vorsprung und die hintere Verteilerplatte 7 eine korrespondierende Ausnehmung - oder umgekehrt - auf. Durch diese Anordnung des Dichtringes 11 ist eine Bewegung des Kaltkanals in Axialrichtung möglich.

Das zweite Ausführungsbeispiel der **Fig. 3** und **4** unterscheidet sich von dem ersten Ausführungsbeispiel in zweierlei Punkten:
Zum einen ist jedem Kaltkanal ein zusätzlicher hohlzylinderförmiger Düsenkörper 12 zugeordnet. In diesem Düsenkörper 12 ist die jeweilige Verschlussnadel 4 festgelegt. Dabei ist die Baueinheit bestehend aus Düsenkörper 12 sowie Verschlussnadel 4 in den zugehörigen Zuführkanal 2 des Düsenblocks 1 eingeführt. Die eigentliche Zuführung der Formmasse erfolgt hier durch den axialen Kanal, welcher in dem hohlzylinderförmigen Düsenkörper 12 ausgebildet ist.

Zum anderen weist auch diese Ausführungsform bezüglich jedes Kaltkanals eine Scheibe 9, eine Feder 10 sowie einen Dichtring 11 auf. Diese sind jedoch zwischen dem Düsenkörper 12 und der vorderen Austrittsplatte 6 bzw. zwischen dem Düsenkörper 12 und der hinteren Verteilerplatte 7 in entsprechender Weise angeordnet.

Schließlich kann zwischen der Außenmantelfläche des Düsenkörpers 12 und der Innenmantelfläche des Zuführkanals 2 ein Luftspalt für eine zusätzliche thermische Isolierung vorgesehen sein.

### BEZUGSZEICHENLISTE

- 1: Düsenblock
- 2: Zuführkanal
- 3: zylindermantelförmiger Freiraum
- 4: Verschlusselement
- 5: Kühlkanal
- 6: Austrittsplatte
- 7: Verteilerplatte
- 8: Düsenöffnung
- 9: Scheibe
- 10: Feder
- 11: Dichtring
- 12: Düsenkörper

## Patentansprüche

1. Gieß- oder Spritzgieß-Werkzeug zum Gießen oder Spritzgießen von Formteilen, umfassend
- einen Kaltkanal-Schmelzeverteiler und
- mehrere Formenhohlräume, denen über den Kaltkanal-Schmelzeverteiler eine Formmasse mit einer Temperatur von weniger als 150°C zuführbar ist und in denen die zugeführte Formmasse anschließend verfestigbar ist, und
- eine Austrittsplatte (6), die je Formenhohlraum eine Düsenöffnung (8) aufweist, wobei in dem Kaltkanal-Schmelzeverteiler jedem Formenhohlraum ein Zuführkanal (2) zum Zuführen der Formmasse mit darin angeordneter, axial verschiebbarer Verschlussnadel (4) zugeordnet ist,
**dadurch gekennzeichnet,**
- **dass** für sämtliche Formmasse-Zuführungen ein gemeinsamer Düsenblock (1) vorgesehen ist, in dem die Zuführkanäle (2) für die Formmasse ausgebildet sind,
- wobei der gemeinsame Düsenblock (1) zwischen einer hinteren Verteilerplatte (7) zum Verteilen der zugeführten Schmelze der Formmasse und der Austrittsplatte (6) sandwichartig festgelegt ist und
- wobei sich die Zuführkanäle (2) des gemeinsamen Düsenblocks (1) jeweils bis zu den Düsenöffnungen (8) erstrecken und jeweils mit einem vorderen Ende in den Düsenöffnungen (8) münden.

2. Gieß- oder Spritzgieß-Werkzeug zum Gießen oder Spritzgießen von Formteilen nach Anspruch 1,
**dadurch gekennzeichnet,**
**dass** zwischen der Austrittsplatte (6) und dem gemeinsamem Düsenblock (1) eine Beabstandung vorliegt, die geeignet ist, einen Luftspalt bereit zu stellen.

3. Gieß- oder Spritzgieß-Werkzeug zum Gießen oder Spritzgießen von Formteilen nach Anspruch 1 oder 2,
**dadurch gekennzeichnet,**
**dass** die Verschlussnadel (4) direkt in dem zugehörigen Zuführkanal (2) angeordnet ist.

4. Gieß- oder Spritzgieß-Werkzeug zum Gießen oder Spritzgießen von Formteilen nach Anspruch 1 oder 2,
**dadurch gekennzeichnet,**
**dass** ein in dem Zuführkanal (2) angeordneter, hohlzylinderförmiger Düsenkörper (12) zur Aufnahme der Verschlussnadel (4) vorgesehen ist.

5. Gieß- oder Spritzgieß-Werkzeug zum Gießen oder Spritzgießen von Formteilen nach zumindest einem der vorhergehenden Ansprüche,
**dadurch gekennzeichnet,**
**dass** in dem Düsenblock (1) Temperierkanäle (5) zum Temperieren der zugeführten Formmasse vorgesehen sind.

6. Gieß- oder Spritzgieß-Werkzeug zum Gießen oder Spritzgießen von Formteilen nach zumindest einem der vorhergehenden Ansprüche,
**dadurch gekennzeichnet,**
**dass** zwischen der vorderen Stirnseite des Düsenblocks (1) und der zugeordneten vorderen Austrittsplatte (6) oder zwischen der vorderen Stirnseite des Düsenkörpers (12) und der zugeordneten vorderen Austrittsplatte (6) um die Düsenöffnung (8) herum eine Scheibe (9) zur Dichtung sowie zur thermischen Isolation angeordnet ist.

7. Gieß- oder Spritzgieß-Werkzeug zum Gießen oder Spritzgießen von Formteilen nach zumindest einem der vorhergehenden Ansprüche,
**dadurch gekennzeichnet,**
**dass** zwischen der hinteren Stirnseite des Düsenblocks (1) und der zugeordneten hinteren Verteilerplatte (7) oder zwischen der hinteren Stirnseite des Düsenkörpers (12) und der zugeordneten hinteren Verteilerplatte (7) eine Feder (10) angeordnet ist und
**dass** um einen rückseitigen Vorsprung und einer dazu korrespondierenden Ausnehmung herum, welche zwischen dem Düsenblock (1) oder dem Düsenkörper (12) und der hinteren Verteilerplatte (7) ausgebildet sind, ein Dichtring (11) angeordnet ist.

## Claims

1. A moulding or injection moulding tool for moulding or injection moulding parts to be moulded, comprising
- a cold runner melt distributor, and
- a plurality of mould cavities to which a moulding compound having a temperature of less than 150 °C can be supplied through the cold runner melt distributor and in which the supplied moulding compound can subsequently be solidified, and
- an outlet plate (6) which has one nozzle opening (8) for each mould cavity, wherein a runner (2) for supplying the moulding compound is allocated to each mould cavity in the cold runner melt distributor, the runner (2) having an axially movable shut-off needle (4) arranged therein,
**characterised in that**
- a common nozzle block (1) is provided for all moulding compound supplies, with the runners (2) for the moulding compound being formed in said common nozzle block (1),
- wherein the common nozzle block (1) is located between a rearward distributor plate (7) for distributing the supplied melt of the moulding compound and the outlet plate (6) in a sandwich-type manner, and
- wherein the runners (2) of the common nozzle block (1) each extend to the nozzle openings (8) and each end in the nozzle openings (8) at a forward end.

2. The moulding or injection moulding tool for moulding or injection moulding parts to be moulded according to claim 1,
**characterised in that**
a spacing which is adapted to provide an air gap is present between the outlet plate (6) and the common nozzle block (1).

3. The moulding or injection moulding tool for moulding or injection moulding parts to be moulded according to claim 1 or 2,
**characterised in that**
the shut-off needle (4) is directly arranged in the associated runner (2).

4. The moulding or injection moulding tool for moulding or injection moulding parts to be moulded according to claim 1 or 2,
**characterised in that**
a nozzle body (12) is provided for receiving the shut-off needle (4), said nozzle body (12) having the shape of a hollow cylinder and being arranged in the runner (2).

5. The moulding or injection moulding tool for moulding or injection moulding parts to be moulded according to at least any one of the preceding claims,
**characterised in that**
tempering channels (5) for tempering the supplied moulding compound are provided in the nozzle block (1).

6. The moulding or injection moulding tool for moulding or injection moulding parts to be moulded according to at least any one of the preceding claims,
**characterised in that**
a disc (9) for sealing or thermally insulating is arranged between the forward end face of the nozzle block (1) and the associated forward outlet plate (6) or between the forward end face of the nozzle body (12) and the associated forward outlet plate (6) around the nozzle opening (8).

7. The moulding or injection moulding tool for moulding or injection moulding parts to be moulded according to at least any one of the preceding claims,
**characterised in that**
a spring (10) is arranged between the rearward end face of the nozzle block (1) and the associated rearward distributor plate (7) or between the rearward end face of the nozzle body (12) and the associated rearward distributor plate (7), and
a sealing ring (11) is arranged around a rearward projection and a recess corresponding therewith, which are formed between the nozzle block (1) or the nozzle body (12) and the rearward distributor plate (7).

## Revendications

1. Outil de moulage ou moulage par injection pour le moulage ou moulage par injection de pièces moulées, comprenant
- un répartiteur de masse fondue à canal froid et
- plusieurs creux de moule auxquels une matière à mouler à une température de moins de 150°C peut être amenée par le biais du répartiteur de masse fondue à canal froid et dans lesquels la matière à mouler amenée peut ensuite être solidifiée, et
- une plaque de sortie (6) qui présente une ouverture de buse (8) par creux de moule, dans lequel un canal d'amenée (2) pour l'amenée de la matière à mouler avec une aiguille de fermeture (4) disposée en son sein, pouvant être coulissée axialement, est associé à chaque creux de moule dans le répartiteur de masse fondue à canal froid,
**caractérisé en ce**
- **qu'**un bloc de buses commun (1) dans lequel les canaux d'amenée (2) pour la matière à mouler sont réalisés est prévu pour toutes les amenées de matière à moule,
- dans lequel le bloc de buses commun (1) est fixé à la manière d'un sandwich entre une plaque de répartiteur arrière (7) pour la répartition de la masse fondue amenée de la matière à mouler et la plaque de sortie (6), et
- dans lequel les canaux d'amenée (2) du bloc de buses commun (1) s'étendent chacun jusqu'aux ouvertures de buse (8) et débouchent chacun avec une extrémité avant dans les ouvertures de buse (8).

2. Outil de moulage ou moulage par injection pour le moulage ou moulage par injection de pièces moulées selon la revendication 1,
**caractérisé en ce**
**qu'**un écart qui convient à mettre à disposition une fente d'aération est présent entre la plaque de sortie (6) et le bloc de buses commun (1).

3. Outil de moulage ou moulage par injection pour le moulage ou moulage par injection de pièces moulées selon la revendication 1 ou 2,
**caractérisé en ce**
**que** l'aiguille de fermeture (4) est directement disposée dans le canal d'amenée (2) associé.

4. Outil de moulage ou moulage par injection pour le moulage ou moulage par injection de pièces moulées selon la revendication 1 ou 2,
**caractérisé en ce**
**qu'**un corps de buse (12) de forme cylindrique creuse, disposé dans le canal d'amenée (2) est prévu pour la réception de l'aiguille de fermeture (4).

5. Outil de moulage ou moulage par injection pour le moulage ou moulage par injection de pièces moulées selon au moins une des revendications précédentes,
**caractérisé en ce**
**que** des canaux à tempérer (5) pour tempérer la matière à mouler amenée sont prévus dans le bloc de buses (1).

6. Outil de moulage ou moulage par injection pour le moulage ou moulage par injection de pièces moulées selon au moins une des revendications précédentes,
**caractérisé en ce**
**qu'**un disque (9) pour l'étanchéification ainsi que pour l'isolation thermique est disposé autour de l'ouverture de buse (8) entre le côté frontal avant du bloc de buses (1) et la plaque de sortie avant (6) associée ou entre le côté frontal avant du corps de buse (12) et la plaque de sortie avant (6) associée.

7. Outil de moulage ou moulage par injection pour le moulage ou moulage par injection de pièces moulées selon au moins une des revendications précédentes,
**caractérisé en ce**
**qu'**un ressort (10) est disposé entre le côté frontal arrière du bloc de buses (1) et la plaque de répartiteur arrière (7) associée ou entre le côté frontal arrière du corps de buse (12) et la plaque de répartiteur arrière (7) associée, et
**qu'**une bague d'étanchéité (11) est disposée autour d'une saillie arrière et d'un évidement correspondant à celle-ci qui sont réalisés entre le bloc de buses (1) ou le corps de buse (12) et la plaque de répartiteur arrière (7).
